# EUROPEAN PATENT APPLICATION

(11) **EP 1 669 134 A1**
(43) Date of publication of application: **14.06.2006**
(21) Application number: 04025495.5
(22) Date of filing: 26.10.2004
(51) Int. Cl.: B01J 35/04, B28B 3/20

(54) **Porous ceramic carrier**

(71) Applicant: Lin, Cheng-Ping, Da-An Dist., Taipei City (TW)
(72) Inventor: Lin, Cheng-Ping, Da-An Dist., Taipei City (TW)
(74) Representative: Sherrard-Smith, Hugh

(57) **Abstract**

A porous ceramic carrier includes a main body (2) having an inside provided with a plurality of intersecting separation walls (21) formed with a plurality of through holes (20), wherein the separation walls (21) have connections each formed with a cylindrical portion (22). Thus, each of the through holes (20) of the separation walls (21) has smooth corners instead of sharp corners so as to reduce the stress applied on the surface of each of the through holes (20), thereby preventing the connections of the separation walls (21) from being worn or broken due to a stress concentration.

## Description

The present invention relates to a porous ceramic carrier, and more particularly to a having an enhanced strength.

A porous ceramic carrier is used in a catalyst such as a far infrared catalyst, a heating element or an electrically conduction element. The porous ceramic carrier does not need secondary heat transfer when in use, so that the porous ceramic carrier is heated rapidly, evenly and safely with a higher thermal efficiency.

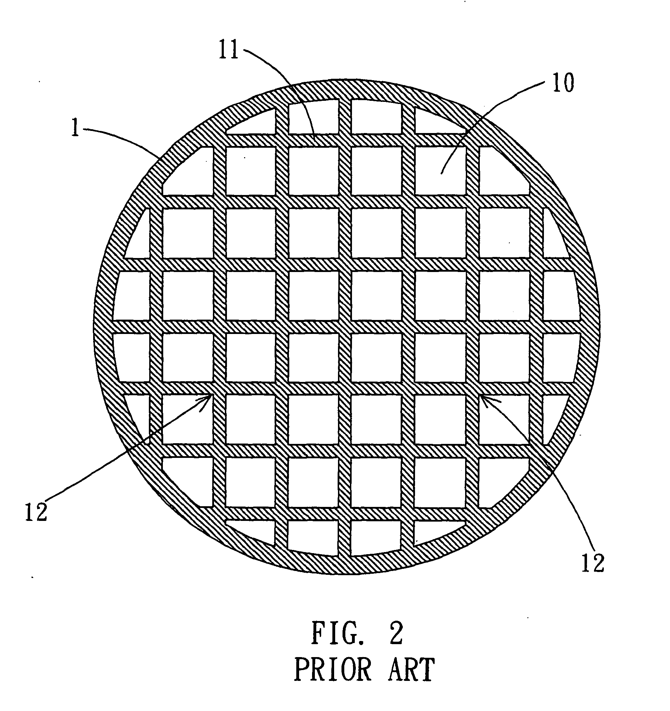

A conventional porous ceramic carrier in accordance with the prior art shown in Fig. 2 comprises a main body 1 having an inside provided with a plurality of intersecting separation walls 11 formed with a plurality of through holes 10. Each of the through holes 10 has four sharp corners 12. However, when fluid passes through the through holes 10, the sharp corners 12 of each of the through holes 10 easily cause a stress concentration, so that the sharp corners 12 are easily worn or broken due to the stress concentration, thereby wearing or breaking the connections of the separation walls 11.

In accordance with the present invention, there is provided a porous ceramic carrier, comprising a main body having an inside provided with a plurality of intersecting separation walls formed with a plurality of through holes, wherein the separation walls have intersecting connections each formed with a cylindrical portion.

The primary objective of the present invention is to provide a porous ceramic carrier having an enhanced strength.

Another objective of the present invention is to provide a porous ceramic carrier, wherein each of the through holes of the separation walls has smooth corners instead of sharp corners so as to reduce the stress applied on the surface of each of the through holes, thereby preventing the connections of the separation walls from being worn or broken due to a stress concentration.

Further benefits and advantages of the present invention will become apparent after a careful reading of the detailed description with appropriate reference to the accompanying drawings.

In the drawings:
Fig. 1 is a plan cross-sectional view of a porous ceramic carrier in accordance with the preferred embodiment of the present invention; and
Fig. 2 is a plan cross-sectional view of a conventional porous ceramic carrier in accordance with the prior art.

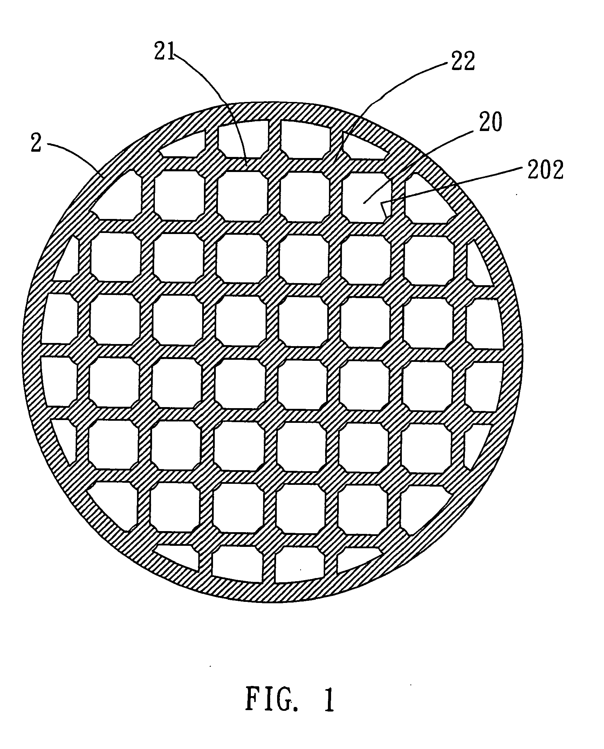

Referring Fig. 1, a porous ceramic carrier in accordance with the preferred embodiment of the present invention comprises a main body 2 having an inside provided with a plurality of intersecting separation walls 21 formed with a plurality of through holes 20. Preferably, the main body 2 is formed integrally by an extruding process and has a proper shape, such as circular or square. The surface of each of the through holes 20 is used to function as a bed for attaching a functional material.

In addition, the separation walls 21 have intersecting connections each formed with a cylindrical portion 22. The cylindrical portion 22 of each of the connections of the separation walls 21 has a portion extended into the through holes 20 and located at a corner of each of the through holes 20, so that each of the through holes 20 has arc-shaped corners 202. Thus, each of the through holes 20 has arc-shaped corners 202 instead of sharp corners so as to reduce the stress applied on the surface of each of the through holes 20, thereby preventing the connections of the separation walls 21 from being worn or broken due to a stress concentration.

Accordingly, each of the through holes 20 of the separation walls 21 has smooth corners 202 instead of sharp corners so as to reduce the stress applied on the surface of each of the through holes 20, thereby preventing the connections of the separation walls 21 from being worn or broken due to a stress concentration.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A porous ceramic carrier, comprising a main body having an inside provided with a plurality of intersecting separation walls formed with a plurality of through holes, wherein the separation walls have intersecting connections each formed with a cylindrical portion.

2. The porous ceramic carrier in accordance with claim 1, wherein the cylindrical portion of each of the connections of the separation walls has a portion extended into the through holes.

3. The porous ceramic carrier in accordance with claim 1, wherein the cylindrical portion of each of the connections of the separation walls is located at a corner of each of the through holes.

4. The porous ceramic carrier in accordance with claim 1, wherein each of the through holes has arc-shaped corners.

5. The porous ceramic carrier in accordance with claim 1, wherein each of the through holes has smooth corners.

6. The porous ceramic carrier in accordance with claim 1, wherein the main body is formed integrally.

7. The porous ceramic carrier in accordance with claim 1, wherein the main body has a circular shape.

8. The porous ceramic carrier in accordance with claim 1, wherein the main body has a square shape.
